# EUROPEAN PATENT APPLICATION

(11) **EP 1 154 209 A2**
(43) Date of publication of application: **14.11.2001**
(21) Application number: 01304249.4
(22) Date of filing: 11.05.2001
(51) Int. Cl.: F25C 5/00, B65G 53/24

(54) **Apparatus and method for dispersing and conveying ice**

(30) Priority: 12.05.2000 US 570470
(71) Applicant: Lancer Ice Link, L.L.C, San Antonio, TX 78219 (US)
(72) Inventor: Berge, J. Eric, Irvine, California 92612 (US); Goff, David Wayne, San Antonio, Texas 78217 (US); McClure, Mark Allen, Chino Hills, California 91709 (US); Glimn, Daniel Arthur, Anaheim Hills, California 92808 (US)
(74) Representative: Wilson, Nicholas Martin

(57) **Abstract**

A multiport ice dispensing device (18) includes an ice hopper (20) containing a paddle wheel (22) and a series of openings (34) in the hopper wall (36) aligned with the wheel's periphery. At each opening's outlet is a gate valve (38) to an ice conveyance conduit (40) to a remote ice-using location (46). Ice is delivered by simultaneously opening the gate valve (38) of the conduit (40) and vacuum line (66) to that location (46). Rotating the wheel (22) inside the hopper (20) presents ice cubes to the active opening and vacuum in the conduit (40) draws the ice cubes into the conduit (40) and on to the remote location (46). Control can be centralized so ice delivery can occur in a predetermined sequence or on an as-needed basis. Diversion of ice from one path to another it is easy and rapid to by simply opening and closing the respective vacuum and gate valves (68,38).

## Description

### CROSS-REFERENCE TO RELATED APPLICATIONS

This application is a continuation-in-part of application Ser. No. 09/364,794, filed on July 30, 1999, which in tum is a continuation-in-part of application Ser. No. 09/207,075, filed on December 7, 1998, which in turn is a continuation-in-part of application Ser. No. 09/128,050, filed on August 3, 1998.

### BACKGROUND OF THE INVENTION

### Field of the Invention:

The invention herein relates to apparatus for use in vacuum pneumatic conveyor systems for the rapid and efficient conveyance of ice. More particularly it relates to apparatus for the dispensing of ice selectively into different paths of a plurality of paths.

### Description of the Prior Art:

Recently a highly efficient system was developed for the rapid vacuum conveyance of ice through a network of ice conduits to various ice storage and dispensing locations such as ice and beverage dispensing machines (IBDs), ice chests, hotel and motel ice dispensers, serving tables for chilled foods and the like.

One of the components of that system is an unbridging device for harvested ice which incorporates a paddle wheel (or equivalent component such as a toothed wheel). In this device the wheel is positioned in an ibe hopper adjacent to a single opening in the wall of the hopper through which ice can pass into a system of ice conduits and on through the system. As the wheel turns it moves the ice to the opening and the vacuum in the system draws the ice into the conduit. In one embodiment the device also has a second opening through which ice can pass. In this embodiment the second opening leads to a short non-vacuum conduit from which ice can be dispensed by gravity into a container such as a bucket. When the vacuum in the system conduit is turned off the motion of the wheel is sufficient to force a small number of ice cubes into the adjacent portion of the system conduit, but friction within the conduct of the accumulated ice quickly halts further ice movement and no more ice passes through the first opening. Continued rotation of the wheel, however, forces ice out of the second opening into the short conduit and gravity is sufficient to cause the entering ice cubes to drop through the short conduit and into the container. Since this short conduit therefore is continually emptied by gravity the rotation of the wheel causes additional ice to pass through the second opening and short conduit and into the container until the container is filled. This allows the device to fill storage containers with ice even when the vacuum conveyance system is turned off, as when all of the remote service receptacles are filled. This ability to remove ice from the system by gravity accommodates the common practice in many embodiments of the conveyance system for the ice making and harvesting equipment not normally to be turned off, which means that ice is continually coming into the system even when it is not needed by the service receptacles.

In that conveyance system the routing of ice through the different branches of the system is accomplished through the use of diverters. The diverters are mechanical-pneumatic or electromechanical devices which can be expensive, complicated to construct and/or difficult to maintain. It would therefore be advantageous if there were apparatus which could accomplish the same ice routing functions of the diverters in a simpler and more effective manner. It would also be advantageous is such apparatus were to be capable of automatic or semi-automatic operation.

### SUMMARY OF THE INVENTION

The invention herein is a new type of device which resembles the paddle wheel unbridger used in the previously disclosed conveyance system but which is an enhanced device to allow for multiple path routing of ice in a simple manner. The device of this invention minimizes mechanical motion, avoids any alignment problems, allows for a substantially greater number of possible paths for the ice than can be accommodated in a practical manner using mechanical diverters, and can switch routings much more rapidly that can mechanical diverters. In the device of this invention there may be 2-12 or more outlet conduits available and readily accessed.

The multiport device includes an ice hopper with a paddle wheel or equivalent rotating device inside. In the wall of the hopper there is a series of openings all positioned around a circle aligned with the wheel's periphery. At the outlet side of each opening there is positioned a gate valve, each of which can be operated independently. Each valve opens into an ice conduit which runs to a remote location, where it joins in a air/ice separator with a vacuum line. When ice is desired at a remote service location a vacuum valve is opened in the vacuum line to the air/ice separator at that location. By electrical or pneumatic means the gate valve leading from the device hopper into the conduit to that remote location is opened simultaneously. As the wheel inside the hopper turns, it forces ice cubes to be presented to the opening and when vacuum is applied, the ice cubes are drawn out of the hopper through the opening and through the open gate valve into the conduit and on to the remote location. Closure of the other gate valves at the other openings from the hopper prevents ice from being drawn into any other conduit. Shutting off the vacuum in the open conduit and simultaneously dosing the gate valve stops ice from being drawn out of the hopper through that opening and being conveyed to that remote location. At the same time, or after some interval, ice may be called for at another remote location, and the operation of the device's wheel and gate valves will be repeated for conveyance of ice to that other location.

Vacuum control of the various conduits and corresponding control of the gate valves can all be centralized through a control panel or computer so that various pairs of valves and conduits can be operated in a predetermined sequence or on an as-needed basis by using appropriate ice quantity sensors at the remote locations which signal when ice is needed and when sufficient ice is present so that ice delivery can be halted. When the paddle wheel is turning, it will present ice to each of the openings. Consequently it is easy and rapid to divert ice from one path to another by simply opening and closing the! respective gate valves. The diversion is therefore much more rapid than with the mechanical diverters since the mechanical diverters need a substantial amount of time in which stop ice flow and complete passage of all ice through the diverter, mechanically move the moveable conduit section to a new alignment with a different system conduit, and restart ice flow through the new system conduit. The difference is particularly pronounced when the outlet to the old conduit and the outlet to the new conduit are at opposite ends or opposite sides of each device. A mechanical diverter requires a substantial amount time to move from one end of its normal travel path to the distant end. In the present device, however, since the wheel is presenting ice to all of the openings, there is virtually no time lag since the operation requires only closing the gate valve at the old conduit and opening the gate valve at the new conduit, so that ice movement immediately stops in the old conduit and starts in the new conduit.

Also, one or more of the opening and valve pairs can be set up for gravity discharge of ice from the device, so that ice can be retrieved even when the vacuum is turned off. The gravity discharge of such pairs can also be positioned such that the discharged ice falls into a second distribution device, such as container feeding an auger, in which the ice is presented to a second set of pairs of openings and gate valves, which provide access to the vacuum conveyance system.

Further, there is no problem with alignment when there is a change from one conduit to another since each of the openings and their respective conduits are permanently fixed in position, with the only moving parts of the device being the paddle wheel and the gate valves.

Therefore, in a principal embodiment, the invention involves apparatus for routing ice pieces into different ones of a plurality of paths within a vacuum operated ice conveyance system, which comprises a hopper having a wall forming an interior chamber for containing ice pieces; a rotatable wheel disposed within the chamber adjacent the wall, the wheel having a plurality of ice-moving projections disposed along a peripheral edge thereof; a plurality of apertures through the wall, the apertures being aligned with the peripheral edge of the wheel, such that as the wheel rotates, the projections traverse past the apertures; a like plurality of elongated vacuum ice conveyance conduits each having an end attached to an exterior surface of the wall and surrounding a corresponding one of the apertures; and an ice passage valve in each conduit disposed proximate to the aperture for controlling passage of air from within the chamber through the aperture into the conduit, such that when the ice passage valve is open vacuum in the conduit draws air from the chamber through the aperture into the conduit; whereby as the wheel rotates, the projections capture ice pieces contained within the chamber and present the ice pieces sequentially to the apertures, and flow of the air flow from the chamber into the conduit through one of the apertures resulting from opening of an ice passage valve associated with the one of the apertures causes the ice pieces upon presentation to the one of the apertures to be drawn therethrough and conveyed into and through the conduit.

In another principal embodiment, the invention involves a method for routing ice pieces into different ones of a plurality of paths within a vacuum operated ice conveyance system, which comprises providing a hopper having a wall forming an interior chamber for containing ice pieces; disposing a rotatable wheel within the chamber adjacent the wall, the wheel having a plurality of ice-moving projections disposed along a peripheral edge thereof; providing a plurality of apertures through the wall, the apertures being aligned with the peripheral edge of the wheel; providing a like plurality of elongated vacuum ice conveyance conduits each having an end attached to an exterior surface of the wall and surrounding a corresponding one of the aperkures; disposing an ice passage valve in each conduit proximate to the aperture for controlling passage of air from within the chamber through the aperture into the conduit, opening the ice passage valve and causing vacuum in the conduit to draw air from the chamber through the aperture into the conduit; and rotating the wheel to cause the projections to capture ice pieces contained within the chamber and present the ice pieces sequentially to the apertures as the projections traverse past the apertures; whereby flow of the air flow from the chamber into the conduit through the aperture resulting from the opening of the ice passage valve causes the ice pieces upon presentation to the aperture to be drawn therethrough and conveyed into and through the conduit.

In a preferred embodiment the device is disposed for direct receipt of harvests of ice from an ice maker, so that the ice is automatically fed to the device from which it is dispensed into the vacuum system. A preferred configuration is to have the ice maker positioned directly above the device of this invention and discharging by gravity directly in to the device's ice hopper.

Other embodiments, aspects and details of the invention will be evident from description below.

### BRIEF DESCRIPTION OF THE DRAWINGS

Figure 1 is a schematic view of the end of a hopper of the present device, partially cut away, showing a representative number of openings with a rotating paddle wheel inside.
Figure 2 is a view similar to Figure 1 showing the conduit end with the gate valves in position.
Figure 3 is a schematic diagram of a portion of an ice conveyance system in which the device of this invention is located, showing routing to a representative number of remote locations and signal pathways for coordinating the opening and closing of the valves required for movement of ice through conduits in response to signals regarding ice delivery requirements from the remote locations.
Figure 4 is a schematic diagram, partially cut away, illustrating that a gate valve can be operated either electrically or pneumatically.
Figure 5 is a pictorial view, partially cut away, showing the interior of a device of the present invention and illustrating a paddle wheel configuration and alignment with openings in the wall of the hopper.
Figure 6 is a schematic diagram of a sectioned portion of the lend of the hopper where the paddle wheel is located, and illustrating that the paddle wheel can be oriented vertically, horizontally or at any desired angle in between.
Figure 7 is a pictorial view of another embodiment of the device of the invention, again showing a representative number of outlets, along with a typical mounting frame, and in particular illustrating combination with an ice maker.

### DETAILED DESCRIPTION AND PREFERRED EMBODIMENTS

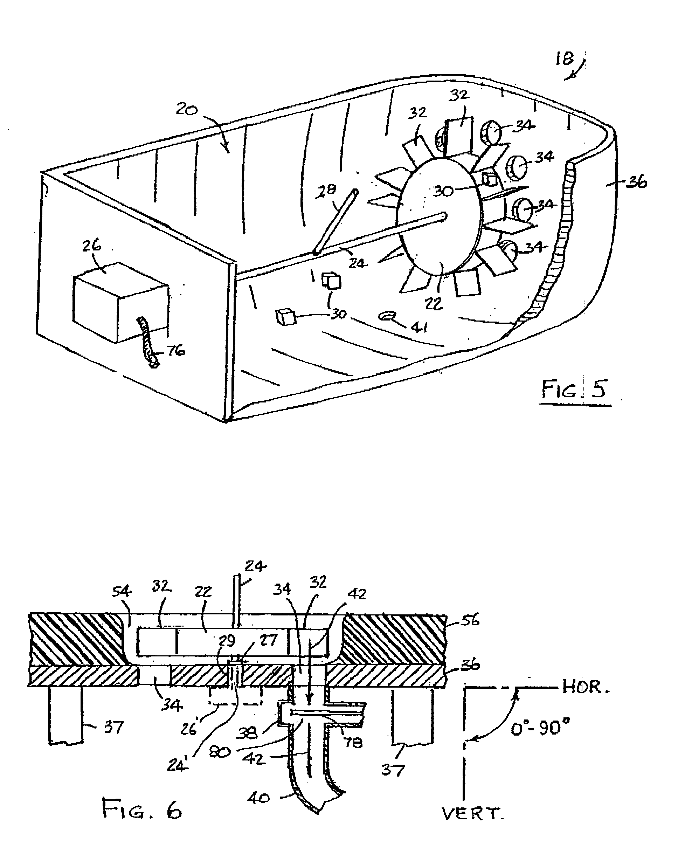

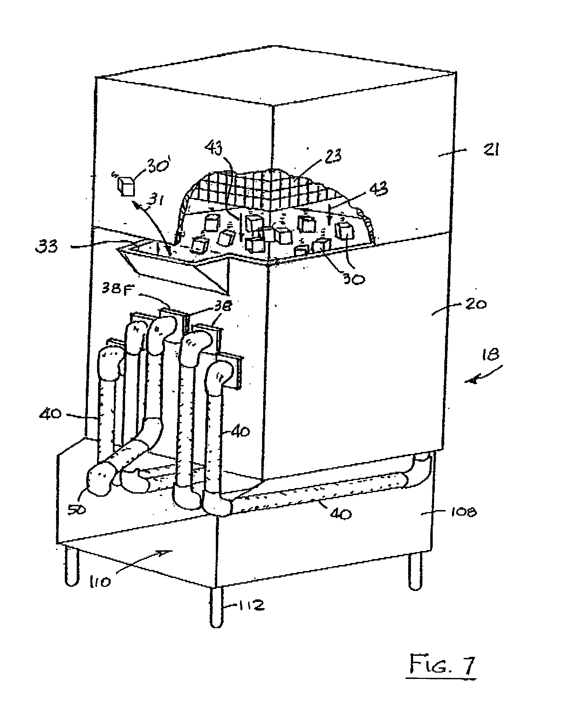

The structure and operation of the device are best understood by reference to the drawings. Considering first Figures 5 and 6, the device 18 will be seen to include a hopper 20 which has an internal volume sufficient to hold a large quantity of ice. The hopper 20 is open at the top for the easy filling with ice. Filling can be manual, with ice from a remote source being transported to the device and dumped into the hopper 20. Preferably, however, the device will be used in combination with a ice maker 21, as illustrated in Figure 7. In the preferred embodiments, the discharge outlet of the ice maker 21 is positioned directly above the open top of the hopper 20 and the ice cubes 30 formed in the ice making mechanism 23 upon harvesting falls by gravity into the hopper 20, as indicated by the arrows 43. While the ice maker 21 generally covers the entire top of the hopper 20, as illustrated, it is convenient to also have present an exterior inlet port 33, through which ice 30' can be dumped or refrieved manually, as indicated by arrow 31, at times when the ice maker and/or conveyor 21 is not harvesting or is inoperative. A cover (not shown) for inlet port 33 may be provided to prevent unwanted materials from enter the port when ice cubes 30' are not being added through the port 33. Since ice makers suitable for use in combination with the device 18 are well known and are widely available commercially from a number of manufacturers, their structures and operation do need not to be described in more detail here.

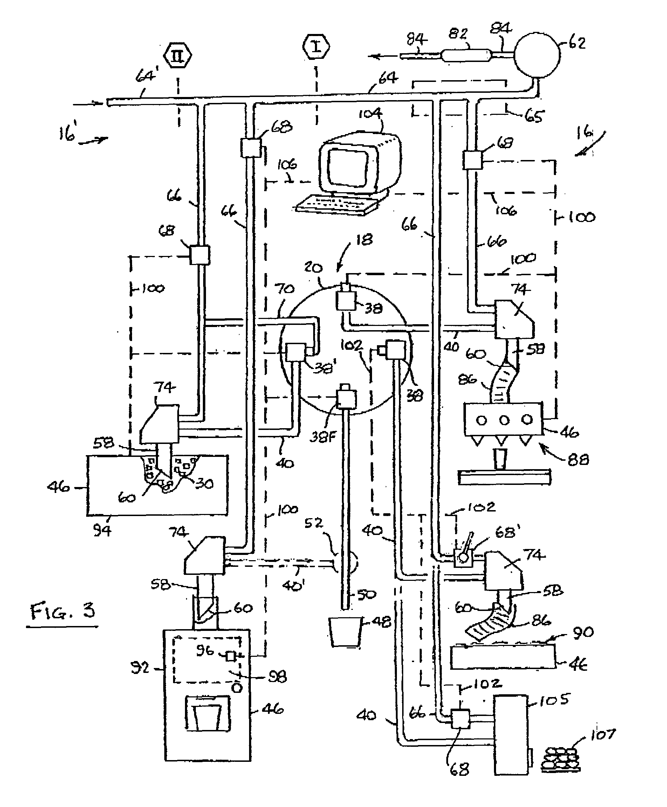

As with the remote location receptacles 46 to be described below, the hopper 20 will be equipped with suitable devices to measure the quantity of ice 30 within the hopper 20, and to activate or deactivate the ice maker 21 and/or start or stop the wheel 22 as needed to maintain the ice level within the hopper 20 with a predetermined quantity range. Hoppers which hold about 350 pounds (159 kg) are currently available commercially and hoppers with capacities of about 500, 750 and up to 1000 pounds (227, 341 and 454 kg, respectively) of ice are expected to be available shortly. The ice maker operation for filling the hopper 20 does not need to be directly coordinated with operation of the vacuum conveyance system. In fact, it is often preferred to run the ice maker 21 after the vacuum system has been shut off to fill the hopper to capacity to meet subsequent demands for ice in excess of the production rate of the ice maker. This is a typical manner of operation for the device 18, ice maker 21 and system 16 in restaurants (especially fast food outlets), where the ice demand at peak meal periods commonly exceeds the production capacity of the ice maker, and the reserve capacity of device hopper 20, filled from the ice maker during off peak periods, is used to insure that the normal peak demand for ice can be satisfied. The related control system is described below, in connection with Figure 3.

Within the hopper 20 is mounted a paddle wheel 22 on a rotating drive shaft 24 which is driven by a motor 26. Motor 26 may be driven electrically or pneumatically. Also mounted on the shaft 24 and rotating with it is breaker bar 28, which functions to prevent the ice in the hopper 20 from clumping or agglomerating. In a particularly large hopper there may be two or more breaker bars 28 mounted along the shaft 24, preferably projecting at different radial angles from each other. In addition to turning the wheel 22 in the normal ice dispensing operation, the motor is preferably also operated intermittently between ice dispensing cycles to turn the shaft 24 and move the breaker bar(s) 24 through the quantity of ice 30 present in the hopper 20, to agitate the ice and prevent it from agglomerating into large clumps or blocks which are difficult or impossible for the wheel to break up.

The motor 26 is illustrated in Figure 5 has being at the exterior side of the end of the hopper 20 away from the wheel 22. Alternatively it can be at the exterior side of the end 36 adjacent the wheel 22, as shown at 26' in Figure 6. In this configuration there is a shaft extension 24' extending through an opening 29 in the wall 36. Where a free end of the shaft 24 meets the wall 36, it will be journalled in a bearing 27 to allow for proper rotation.

As the paddle wheel 22 turns ice cubes 30 are caught between the paddles 32 and are moved along a series of openings (apertures) 34 in the wall 36 of the hopper 20. Openings 34 are aligned along circle 44, which is defined by the path of the paddles 32 as the wheel 22 turns. As the ice cubes 30 are presented to the successive openings 34, they pass by until they encounter an active opening 34 which has its gate valve 38 open so that there is a vacuum applied to the opening 34. The presented ice cubes 30 are drawn into the active opening 34 by the vacuum, pass through the gate valve 38 and on into the conduit 40, as indicated by the arrows 42. Movement of the ice through this conduit 40 to a remote location 46 continues until either the available ice in the hopper 20 is exhausted or the vacuum in that conduit 40 is turned off.

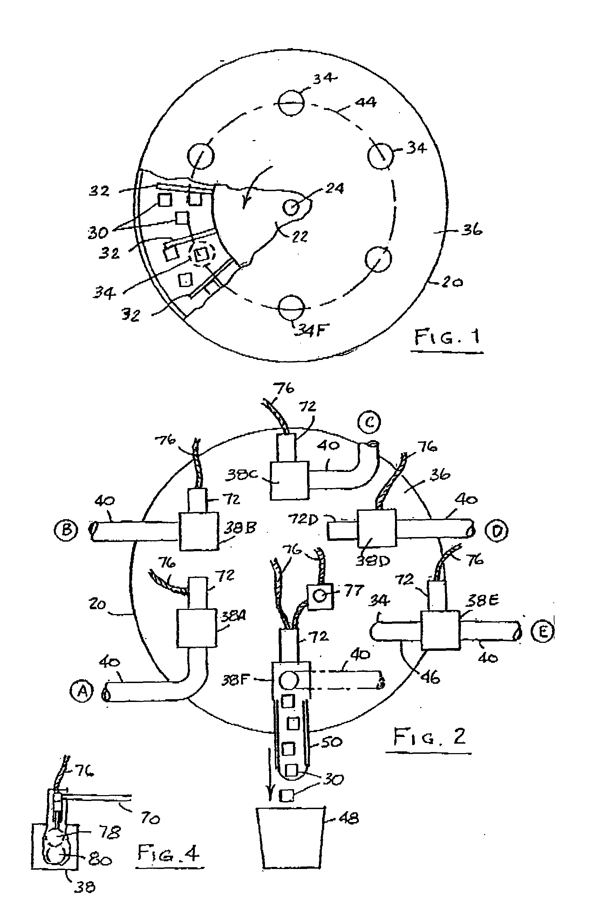

It will be seen from Figure 1 and 2 that there may be many openings 34 and therefore an equivalent number of conduits 40 which may be accommodated spatially along the circle 44 of openings 34. The principal factor in accommodating a specific number of conduits will be the size and placement of the gate valves 38. The minimum number of openings 34 will normally occur when the gate valves 38 are placed directly in line with the openings 34, as is illustrated by gate valves 38A-38D in Figure 2. Reduced spacing and therefore additional openings can be accommodated by moving the gate valves 38 away from being in direct alignment with the openings 34, as illustrated by valve 38E. In this configuration a short length of conduit 46 connects the opening 34 to the valve 38 (38E). The farther away the gate valves 38 are moved, the more openings 34 can be accommodated. Space accommodation can also be accomplished by turning the gate valves 38 so that their stems 72 do not interfere with each other or with their conduits 40, as illustrated by the positioning of gate valve 38D and its stem 72D in Figure 2. Because the gated channel 80 within a gate valve is normally circular, rotating a valve 38 around the axis of its interior channel will not significantly affect its operation. The gate valves 38 may each be aligned independently. The maximum number of openings 34 will also be dependent upon the size of the hopper end 36 and the diameter of the paddle wheel 22 and length of its paddles 32, which will determine the diameter and circumference of the circle 44. It is anticipated that for most devices there will be 2-12 openings 24, most commonly 4-10, although more may be present depending on the diameter of the wheel 22, the diameters of the openings 24 and the orientation of the gate valves. Also, while the drawings generally show the openings disposed equidistant around the circle 44 for convenience in illustration, it will be understood the equidistant spacing is not required, that the openings 44 may be spaced along the circle 44 at any convenient intervals, and that the intervals need not be equal to each other. It is contemplated that in many embodiments the openings 34 may all be grouped in a limited segment of the circle 44, as illustrated in Figure 7.

While each of the openings 34 normally leads to a conduit 40 and on to a remote location 46, it is often desirable to have one of the openings 34 be capable of releasing ice cubes 30 directly from the hopper 20 into a container 48 such as a bucket, as illustrated by gate valve 38F in Figures 2 and 7. Gate valve 38F and its corresponding opening designated 34F lead directly out to a short conduit 50 which may be a tubular conduit or an open chute. The outlet of conduit 50 is located so that a container 48 can be positioned below the outlet. ice dispensed through opening 34F and gate valve 38F will fall by gravity into the container 48. This permits collection of ice at any time independent of operation of the vacuum conveyance system, such as for bagging or out-of-system beverage service, whether or not system ice production or ice harvesting is taking place. It is also possible for opening 34F and gate valve 38F to be configured such that a conduit 40 can also be used with that opening and gate valve, in addition to the gravity conduit 50, as illustrate in Figures 2 and 3. For instance, a rotary valve 52 can be incorporated into the conduit 40' leading from gate valve 38F so that ice can be alternatively routed through valve 52 to short conduit 50 or on into the regular conduit 40. Manual operation of gate valve 38F may be by means of electric button momentary switch 77 in electric line 76 which activates gate 78 to open or close the channel 80.

Figure 5 illustrates the paddle wheel 22 in a generally vertical position.
However as indicated in Figure 6 paddle wheel 22 can be oriented at any desired angle from horizontal to vertical. The conduits 40 will be routed away from the valves 40 in directions according to the orientation of the wheel 22 and the openings 34. Figures 2 and 7 show typical routings where the wheel is vertical or somewhat so. Figure 6 shows a typical orientation when the wheel 22 is horizontal or somewhat so, with a conduit 40 illustrated as being turned to run horizontally until it is clear of the device 18. When the wheel 22 is horizontal or somewhat so, the device 18 will be raised, as by mounting on legs 37 or a frame 108 such as illustrated in Figure 7, to allow room for the gate valves 38 and conduits 40 to function properly.

Also as illustrated in Figure 6, it may be advantageous to mount the paddle wheel 22 in a recess 54 in wall 36. The recess 54 may be formed directly in the wall 36 if the wall is sufficiently thick, or an inner layer 56 of plastic, dense foam or the like may be added to the inside of wall 36 to accommodate and form the recess 54. The function of the recess 54 is to assist in guiding the ice cubes 30 into the spaces between the paddles 32 and retaining them in those spaces until they can be presented to an operating opening 34. In the absence of the recess 54 there is a tendency for some of the ice cubes 30 to fall back into the open space of the hopper and not become presented to the openings 34 when the paddle wheel 22 is oriented toward the vertical, and for the cubes 30 to be pushed away from the openings 34 and not be motivated back into the wheel 22 when the wheel 22 is oriented toward the horizontal. The recess 54 should be sized with a diameter that guides the cubes 30 without allowing the cubes to become wedged between the sides of the recess 54 and the ends of the paddle wheel paddles 32, which could cause the paddle wheel 22 to jam or bend the paddles 32.

It will be recognized that incidental to dispersing the ice cubes 30, the wheel 22 also serves to debridge them where necessary. The device 18 thus avoids the necessity of providing a separate debridger in the system.

The operation of the system is best illustrated in Figures 3 and 4. Figure 4 is a diagram illustrating that the movement of gate 78 to open and close the internal channel 80 of a gate valve 38 can be accomplished electrically through electrical cable 76 or pneumatically through vacuum line 70. Electrically operated valves are illustrated in Figure 2 and a pneumatically operated valve is illustrated at 38' in Figure 3. The internal operation of electric and pneumatic gate valves 38 does not need to be detailed here since such devices are common and are sold in many commercial configurations.

In the overall ice conveyance system 16 a blower 62 is operated to create a vacuum in manifold 64 from which individual vacuum lines 66 run to remote location separators 74 at each remote location 46. (While the lines 66 are shown generally spaced apart in Figure 3 for clarity, it is convenient in practice to group them close to the inlet of the blower 62, as indicated by the outline 65.) The exhaust air from the blower 62 is vented to the ambient surroundings through line 84 which may contain a muffler 82. Manifold 64 may also extend on to additional systems 16' (or additional portions of the same system 16) as indicated at 64', and there will usually be other blowers 62 operating in those other systems 16. (The dividing line can be, for instance, at position I or position II. If it is at position I then the gates 38 shown at the left and bottom of the device 18 in Figure 3 operate with the system 16' and the other two gates at the top and right operate with the system 16.)

Also running to each air/ice separator 74 at each remote location 46 is an ice conduit 40 from one of the gate valves 38. Vacuum in line 66 creates a vacuum in separator 74 which draws ice cubes 30 through conduit 40 into the separator 74. The separator 74 is configured such that the ice cubes' 30 cannot be drawn into line 66 and therefore must pass into accumulator 58, which is closed by a vacuum restrained door 60. When door 60 is opened either by relief of the vacuum or by other means, the ice falls through door 60 and into a container at the remote location 46. In various configurations the ice may be directed through a flexible sleeve or hose such as 86 between the door 60 and the remote location 46 or the ice may pass directly into an internal storage chamber such as 98 within the remote location 46. The various types of remote locations 46 may include but are not limited to food service and restaurant ice and beverage dispensers (IBDs) such as 88; open ice containers such as salad bars 90; hotel, motel, hospital, etc., ice dispensers such as 92; general ice storage containers such as 94 and ice bagging machines such as 105. Those skilled in the art will be aware of numerous other types of ice containing receptacles which may be employed at remote locations 46. (Those skilled in the art will also recognize that Figure 3 is schematic, and that any of the various ice receptacles 88, 90, 92, 94 and 105, as well as others well known in the industry, can be interchanged or duplicated within the system 16, and that the specific number and type of receptacles present in any given system will be determined by the size and layout of such system and the type and size of facility within which it is located.)

Typically a remote location 46 will be fitted with an appropriate sensor 96 within or in operative contact with an ice chamber 98 of a unit such as 92 at the remote location 46. The sensor 96 will detect when the ice quantity in chamber 98 is low and needs to be replenished and will also detect when the ice quantity in chamber 98 is sufficiently high and delivery of ice into chamber 98 should be halted. The sensor 96 will send a signal through line 100 to both the vacuum valve 68 and the gate valve 38 in the respective vacuum line 66 and ice conduit 40 leading to that remote location 46, in response to which the two valves will open or close simultaneously. The sensors may operate on the basis of weight of the ice present, level of the top of the ice pile within the chamber, or other known means of sensing the quantity of a body of material. Typical sensors of such types and self-responsive valves 38 and 68 are well-known and widely available commercially and do not need to be detailed here. Alternatively, the signals can be run through a microprocessor such as 104 which in tum will activate valves 38 and 68 as indicated at 106 to open and close simultaneously through appropriate software and valve operation devices, all of which are known and available commercially. Illustrated in Figure 3 is the simultaneous operation of each pair consisting of a valve 68 which controls the vacuum in a line 66 and the corresponding gate valve 38 which controls flow of the ice, both to the same remote location 46. It is also possible to operate the system for a particular remote location manually, as indicated by manual control vacuum valve 68'. In this case manual operation of valve 68' will send a signal through line 102 to its respective gate valve 38 so that the gate valve 38 will open simultaneously with the manual opening of vacuum valve 68'.

Another embodiment of this invention is illustrated in Figurel 7. In this embodiment the hopper 20 is elevated by being mounted on a semi-enclosed frame 108. The interior space 110 under the hopper 20 can be used to route conduits 40 as shown, to provide space for various controls, sumps, drains, equipment and parts storage and the like. The frame 108 or the hopper 20 itself may be further elevated on legs 112, which can provide for access to floors, drains, etc. under the device 18.

Other embodiments and modes of operation are also contemplated. For instance, the openings 24 in the device may be divided into two or more groups, with the conduits 40 in each one group leading to remote locations 46 and air/ice separators which are part of a vacuum system 16 which is different from the system to which the openings in the other group(s) are connected. This will allow for ice 30 to be drawn out of two or more openings 24 simultaneously since different vacuum sources (blowers 62) will be drawing ice 30 through the openings 24 in the different groups. Similarly, the hopper 24 may have two different wheels 22 in different locations within the hopper, either operating on the same shaft 24 with motor 26 or on different shafts with different motors. Each wheel will have its own set of openings 24 and will normally be operating with its own vacuum conveyance system and blower. The control system such as that operating though microprocessor 104 will be configured to accommodate these various dual or multiple systems, so that the ice demands made on the device 18 by one system will not interfere with the ice demands of the other system(s).

The hopper 20 and paddle wheel 18 may be made of any convenient material which has a smooth finish to facilitate movement of the ice cubes 30 and which can be Kept clean and sanitary in accordance with the requirements of food contact or usage in food areas. Stainless steel, aluminum, hard plastics and the like may all be suitable. The hopper 20 will also have a drain 41 to allow removal of water from melted ice and of cleaning solutions.

The ice has been described above in terms of ice cubes 30. It will understood by those skilled in the art that this device may be used with a wide variety of ice products, including those commonly known as "cube ice" (the above mentioned "ice cubes:), "nugget ice," "bridged ice," "granular ice," "chunk ice" and "crushed ice," or any other form or size of vacuum pneumatically conveyable ice pieces, regardless of the name applied.

It will be evident that there are numerous embodiments of the present invention which are not expressly described above, but which are clearly within the scope and spirit of the invention. The above description is therefore to be considered exemplary only, and the actual scope of the invention is to be defined solely by the appended claims.

## Claims

1. Apparatus for routing ice pieces into different ones of a plurality of paths within a vacuum operated ice conveyance system, which comprises:
a hopper having a wall forming an interior chamber for containing ice pieces;
a rotatable wheel disposed within said chamber adjacent said wall, said wheel having a plurality of ice-moving projections disposed along a peripheral edge thereof;
a plurality of apertures through said wall, said apertures being aligned with said peripheral edge of said wheel, such that as said wheel rotates, said projections traverse past said apertures;
a like plurality of elongated vacuum ice conveyance conduits each having an end attached to an exterior surface of said wall and surrounding a corresponding one of said apertures; and
an ice passage valve in each said conduit disposed proximate to said aperture for controlling passage of air from within said chamber through said aperture into said conduit, such that when said ice passage valve is open vacuum in said conduit draws air from said chamber through said aperture into said conduit;
whereby as said wheel rotates, said projections capture ice pieces contained within said chamber and present said ice pieces sequentially to said apertures, and flow of said air flow from said chamber into said conduit through one of said apertures resulting from opening of an ice passage valve associated with said one of said apertures causes said ice pieces upon presentation to said one of said apertures to be drawn therethrough and conveyed into and through said conduit.

2. Apparatus as in Claim 1 wherein said plurality of apertures comprises 2-12 apertures.

3. Apparatus as in Claim 2 wherein said plurality of apertures comprises 4-10 apertures.

4. Apparatus as in Claim 1 wherein said ice passage valves comprise gate valves.

5. Apparatus as in Claim 1 further comprising ice dispensing activation means for alternatively opening and dosing each said ice passage valve.

6. Apparatus as in Claim 5 wherein said ice dispensing activation means is operated electrically or pneumatically.

7. Apparatus as in Claim 1 wherein said wheel also debridges said ice pieces.

8. Apparatus as in Claim 1 further comprising each said conduit extending to a remote location wherein said ice pieces moving through said conduit are discharged from said conduit into a container, and vacuum generation means in fluid contact with said conduit for creating said vacuum within said conduit for motivating said ice pieces to traverse through said conduit to said remote location.

9. Apparatus as in Claim 8 further comprising vacuum control means for providing or blocking said fluid contact between said vacuum generation means and each said conduit, activation of said vacuum control means for a conduit alternatively creating or eliminating said vacuum within said conduit.

10. Apparatus as in Claim 9 further comprising ice routing means for activating simultaneously said ice passage activation means to activate a said ice passage valve and a corresponding said vacuum control means, such simultaneous activation causing said ice passage valve to open and said vacuum to be created within a corresponding one of said conduits to allow conveyance of said ice pieces through said conduitto said corresponding remote location or causing said ice passage valve to close and said vacuum to be eliminated within a corresponding one of said conduits to halt conveyance of said ice pieces through said conduit to said corresponding remote location.

11. Apparatus as in Claim 10 further comprising signal generating means for activating said ice routing means in response to a signal generated thereby.

12. Apparatus as in Claim 11 wherein said signal generation means comprises a sensor at said remote location for sensing the quantity of ice pieces present in said container and generating said signal indicative of said quantity sensed, said ice routing means being responsive to said signal.

13. Apparatus as in Claim 12 wherein response of said ice routing means to said signal operates to cause conveyance of said ice pieces to said remote location if said signal indicates less ice present at said remote location than a predetermined minimum desired quantity and operates to halt conveyance of said ice pieces to said remote location if said signal indicates more ice present at said remote location than a predetermined maximum desired quantity.

14. Apparatus as in Claim 11 wherein said signal generation means comprising a microprocessor operating to generate a signal to cause activation of said ice routing means, in response to software comprising an algorithm for scheduling time and quantity of delivery of ice to said remote location.

15. Apparatus as in Claim 1 wherein said wheel is oriented horizontally.

16. Apparatus as in Claim 1 wherein said wheel is oriented vertically.

17. Apparatus as in Claim 1 wherein said wheel is oriented at an angle between fully horizontal and fully vertical.

18. Apparatus as in Claim 10 further comprising means for causing said ice routing means to activate and deactivate at least two pairs of corresponding said ice passage valve and vacuum control means in succession.

19. Apparatus as in Claim 1 further comprising:
an additional aperture through said wall, said additional aperture also being aligned with said peripheral edge of said wheel, such that as said wheel rotates, said projections traverse past said additional aperture;
a short conduit for ice conveyance having an end attached to an exterior surface of said wall and surrounding said additional aperture; and
an additional ice passage valve in said short conduit disposed proximate to said aperture for controlling passage of air between said chamber and said conduit through said aperture, such that when said ice passage valve is open rotation of said wheel causes ice pieces to pass through said aperture into said short conduit;
said short conduit being disposed such that ice pieces exiting from said chamber through said aperture and valve fall by gravity through short conduit and exit therefrom at an opposite end of said short conduit;
whereby ice pieces may be removed from said chamber through said short conduit in the absence of presence of vacuum in said ice conveyance system.

20. Apparatus as in Claim 19 wherein said short conduit comprises a tubular conduit or an open chute.

21. Apparatus as in Claim 20 further comprising a portable container disposed adjacent said opposite end of said short conduit for collection of said ice pieces exiting from said short conduit.

22. Apparatus as in Claim 19 further comprising selection means path selection means disposed between said valve and said short conduit, and also attached to an additional one of said elongated vacuum ice conveyance conduits, whereby operation of said selection means causes said ice pieces passing through said valve to be directed either to said short conduit or to said additional one of said elongated vacuum ice conveyance conduits.

23. Apparatus as in Claim 19 wherein said valve is activated manually.

24. Apparatus as in Claim 1 further comprising said pluralities of apertures and ice passage valves being divided into at least two groupings, with said ice conveyance conduits for one grouping being part of a vacuum ice conveyance system separate from a vacuum ice conveyance system for said ice conveyance conduits for another grouping.

25. A method for routing ice pieces into different ones of a plurality of paths within a vacuum operated ice conveyance system, which comprises:
providing a hopper having a wall forming an interior chamber for containing ice pieces;
disposing a rotatable wheel within said chamber adjacent said wall, said wheel having a plurality of ice-moving projections disposed along a peripheral edge thereof;
providing a plurality of apertures through said wall, said apertures being aligned with said peripheral edge of said wheel;
providing a like plurality of elongated vacuum ice conveyance conduits each having an end attached to an exterior surface of said wall and surrounding a corresponding one of said apertures;
disposing an ice passage valve in each said conduit proximate to said aperture for controlling passage of air from within said chamber through said aperture into said conduit,
opening said ice passage valve and causing vacuum in said conduit to draw air from said chamber through said aperture into said conduit; and
rotating said wheel to cause said projections to capture ice pieces contained within said chamber and present said ice pieces sequentially to said apertures as said projections traverse past said apertures;
whereby flow of said air flow from said chamber into said conduit through said aperture resulting from said opening of said ice passage valve causes said ice pieces upon presentation to said aperture to be drawn therethrough and conveyed into and through said conduit.

26. A method as in Claim 25 further comprising debridging said ice pieces by contact with said rotating wheel.

27. A method as in Claim 25 further comprising:
extending each said conduit to a remote location wherein said ice pieces moving through said conduit are discharged into a container, and
creating said vacuum within said conduit by vacuum generation means in fluid contact with said conduit and thereby motivating said ice pieces to traverse through said conduit to said remote location.

28. A method as in Claim 27 further comprising:
providing for each said remote location an indication of a quantity of ice present at said remote location and in response to said indication operating said ice conveyance system to convey said ice pieces to said remote location if said indication is of less ice present at said remote location than a predetermined minimum desired quantity and to halt conveyance of said ice pieces to said remote location if said indication is of more ice present at said remote location than a predetermined maximum desired quantity.

29. A method as in Claim 27 further comprising
providing or blocking said fluid contact between said vacuum generation means and each said conduit, and
activating said vacuum control means for a conduit and thereby alternatively creating or eliminating said vacuum within said conduit.

30. A method as in Claim 27 further comprising simultaneously activating a said ice passage valve and a corresponding said vacuum control means and thereby causing said ice passage valve to open and said vacuum to be created within a corresponding one of said conduits to allow conveyance of said ice pieces through said conduit to said corresponding remote location or causing said ice passage valve to close and said vacuum to be eliminated within a corresponding one of said conduits to halt conveyance of said ice pieces through said conduit to said corresponding remote location.

31. A method as in Claim 27 further comprising means for causing said ice routing means to activate and deactivate at least two pairs of corresponding said ice passage valve and vacuum control means in succession.

32. A method as in Claim 25 further comprising:
providing an additional aperture through said wall, said additional aperture also being aligned with said peripheral edge of said wheel;
providing an additional ice passage valve disposed proximate to said aperture for controlling passage of air between said chamber and said conduit through said aperture;
opening said additional ice passage valve and operating said wheel to force ice pieces through said additional aperture and said additional ice passage valve to fall by gravity into a container;
whereby ice pieces may be removed from said chamber through in the absence of presence of vacuum in said ice conveyance system.

33. A method as in Claim 25 further comprising dividing said pluralities of apertures and ice passage valves into at least two groupings, with said ice conveyance conduits for one grouping being part of a first vacuum ice conveyance system separate from a second vacuum ice conveyance system for said ice conveyance conduits for another grouping, and
operating each said vacuum ice conveyance system to withdraw ice from said hopper through its respective said apertures and valves independently of another said vacuum ice conveyance system.

34. A method according to any one of claims 25 to 33 further comprising providing a microprocessor operating in response to software comprising an algorithm for scheduling time and quantity of delivery of ice in each said vacuum ice conveyance system to withdraw said ice from said hopper and deliver said ice to at least one said remote location within said vacuum ice conveyance system without interference with withdrawal of said ice from said hopper by another said vacuum ice conveyance system and delivery of withdrawn said ice to at least one said remote location within said another vacuum ice conveyance system.
